# EUROPEAN PATENT SPECIFICATION

(11) **EP 2 624 638 B1**
(45) Date of publication and mention of the grant of the patent: **25.04.2018**
(21) Application number: 12290038.4
(22) Date of filing: 31.01.2012
(51) Int. Cl.: H04J 11/00

(54) **Method for reducing the uplink interferences produced by non-serving users and associated equipments in heterogeneous networks**
Verfahren zur Reduktion der Uplink-Interferenzen, die von Non-Serving-Benutzern erzeugt werden und zugehörige Geräte in heterogenen Netzwerken
Procédé pour la réduction des interférences en liaison montante produites par des utilisateurs non desservis et équipements associés dans des réseaux hétérogènes

(43) Date of publication of application: 07.08.2013
(73) Proprietor: Alcatel Lucent, 91620 Nozay (FR)
(72) Inventor: Sapiano, Philip, Westlea, Swindon WI SN5 7DJ (GB); Cassuto, Philippe, 91620 Nozay (FR); Wong, Eliza, 91620 Nozay (FR)
(74) Representative: Browne, Robin Forsythe

(56) References cited:
- WO-A1-99/45736
- WO-A1-2010/006909
- WO-A1-2010/104450
- WO-A1-2010/121635
- "3rd Generation Partnership Project; Technical Specification Group Radio Access Network; Enhanced uplink; Overall description; Stage 2 (Release 11)", 3GPP STANDARD; 3GPP TS 25.319, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 20 December 2011 (2011-12-20), pages 1-83, XP050554939, [retrieved on 2011-12-20]
- "3rd Generation Partnership Project; Technical Specification Group Radio Access Network; UTRAN Iur interface Radio Network Subsystem Application Part (RNSAP) signalling (Release 11)", 3GPP STANDARD; 3GPP TS 25.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.0.0, 19 December 2011 (2011-12-19), pages 1-1145, XP050554653, [retrieved on 2011-12-19]

## Description

### BACKGROUND OF THE INVENTION

The present invention relates to the field of the wireless cellular communication networks and more particularly to the uplink interferences produced by the user equipments of neighbouring cells in heterogeneous networks.

Recent wireless cellular communication networks have been deployed based on a code division multiple access (CDMA) or wideband code division multiple access (WCDMA) protocols wherein all users are distinguished from each other by using orthogonal spreading codes so that multiple users can use the same frequency band at the same time and within the same area. Such technology allows maximizing the available frequency spectrum but in counterpart it requires an effective power control in order to limit interferences as any user equipment can cause interferences to the others. The power level, among other parameters, of the user equipments is therefore transmitted to the attached base stations through an enhanced-dedicated channel (E-DCH).

Besides, a heterogeneous network refers to a network having cells of different types, for example macro-cells and small-cells, that work independently from each other and with different radio transmission powers.

Thus, in a heterogeneous network and especially a heterogeneous network based on CDMA or WCDMA technology, two neighbouring cells may use the same frequency band so that a user equipment attached to one of the neighbouring cell, herein called the serving cell, may produce interferences in the other cell, herein called non-serving cell. However, as both cells work independently, the non-serving cell has no mean for controlling the power level of the user equipment causing the interferences. As a consequence, in response to interferences produced by the neighbouring cell, both neighbouring cells ask their attached or serving user equipments to increase their power level leading to a wind-up effect and therefore to a degradation of the signal to noise ratio for both cells.

A possible solution to overcome this problem would be to establish a soft handover between the serving and the non-serving cells. Indeed, in a soft handover situation, also called macro-diversity, the signals received by the serving and the non-serving cells are combined to improved the signal to noise ratio and the non-serving cell is able to control the power level of the user equipment. However, in the case of neighbouring cells corresponding to a macro-cell and a small-cell, the uplink/downlink power imbalance between both cells limits the soft handover gain. Moreover, with small-cells having a flat IP structure (base station and radio network controller gathered in a base station router), the implementation of a full soft handover mechanism is quite complex. Another solution is given in document WO2010/121635 wherein power level instructions are sent from a macro base station to a femto base station.

### SUMMARY OF THE INVENTION

It is therefore an object of the present invention to provide a solution to overcome, at least partially the pre-cited drawbacks of the state of the art and to allow controlling the uplink interferences in a heterogeneous network.

The invention is defined in the independent claims. Embodiments of the invention are defined in the dependent claims. An example useful for understanding the present invention refers to a method for reducing the uplink interferences produced by non-serving user equipments using an enhanced-dedicated channel "E-DCH" in a heterogeneous wireless cellular communication network comprising a first and a second radio network subsystems that are independent and that present coverage areas that are at least partially overlapping wherein the first radio subsystem comprises a radio network controller establishing a communication interface with at least one macro base station operating at least one macro-cell on one side and with a core network on the other side,
wherein the second radio network subsystem comprises a small-cell gateway establishing a communication interface with at least one small-cell base station router operating at least one small-cell on one side and with a core network on the other side wherein it comprises the following steps:
- establishing a set up parameter exchange interface between the radio network controller of the first radio network subsystem and the small-cell gateway of the second radio network subsystem,
- when a user equipment attached to the first radio network subsystem is located in the coverage area of the second radio network subsystem, transmitting, through the established interface, radio link set up information including physical layer parameters information from the first radio network subsystem to the second,
- receiving by the second radio network subsystem uplink coded E-DCH control channel information sent from the user equipment,
- configuring the second radio network subsystem based on the transmitted radio link set up information in order to decode the received E-DCH control channel information,
- estimating the uplink interference level produced by the user equipment in the second radio network subsystem based on the decoded E-DCH control channel information,
   if the estimated uplink interference level in the second radio network subsystem reaches a predetermined threshold,
- establishing a downlink connection between the second radio subsystem and the user equipment based on the transmitted radio link set up information and sending through the established downlink connection a request to reduce the uplink power level of the said user equipment.

According to another aspect of the present invention, the first radio network subsystem provides a macro-cell coverage and comprises at least one macro base station and a radio network controller and wherein the second radio network subsystem provides a small-cell coverage and comprises a small-cell base station router and a small-cell gateway.

According to another aspect of the present invention, the wireless cellular communication network is based on a Wideband Code Division Multiple Access "WCDMA" protocol.

According to another aspect of the present invention, the interface established between the first and the second radio network subsystem is an Iur interface established between the small-cell gateway and the radio network controller of the radio network subsystem providing a macro-cell coverage.

According to another aspect of the present invention, the radio link set up information transmitted through the established interface corresponds to Radio Network Subsystem Application Part "RNSAP" radio link "RL" set up information.

According to another aspect of the present invention, the predetermined threshold corresponds to a predetermined interference level threshold.

According to another aspect of the present invention, the request to reduce the uplink power level corresponds to a relative grant to reduce the uplink power level.

Another example useful for understanding the present invention also refers to a first radio network subsystem with at least one macro-cell comprising:
- a radio network controller,
- connection means adapted for establishing a communication interface between the radio network controller and at least one macro base station on one side and with a core network on the other side,
characterized in that the connection means are also adapted for establishing a set up parameter exchange interface between the radio network controller and a small-cell gateway of a of a second network subsystem that works independently from the first radio network subsystem and that corresponds to a small-cell radio network subsystem of a neighbouring small-cell, the radio network controller being configured to transmit radio link set up information including physical layer parameters information to the small-cell gateway of the small-cell radio network subsystem through the set up parameter exchange interface when a user equipment connected to one of the at least one macro base station is located within the coverage area of the neighbouring small-cell wherein the radio network controller is also configured for receiving radio link set up information including physical parameters information from the small cell gateway of the small-cell radio subsystem through the set up parameter exchange interface when a user equipment connected to the neighbouring small-cell of the small-cell radio network subsystem is located within the coverage area of the at least one macro base station and wherein the radio network subsystem also comprises:
- reception means for receiving coded E-DCH control channel information transmitted on the uplink physical layer by a user equipment connected to the neighbouring small-cell,
- processing means adapted for:
   - decoding the received coded E-DCH control channel information based on the received radio link set up information,
   - estimating the interference level produced by the said user equipment in a macro-cell operated by the at least one macro base station controlled by the radio network controller based on the decoded E-DCH control channel information
   - establishing a downlink connection between the user equipment and the at least one macro base station based on the received radio link set up information and sending a request through the established downlink connection to the said user equipment for reducing its uplink power level if the estimated interference level reaches a predetermined threshold.

According to another aspect of the present invention, the set up parameter exchange interface is an Iur interface and wherein the radio link set up information corresponds to a Radio Network Subsystem Application Part "RNSAP" radio link "RL" set up information.

Another example useful for understanding the present invention also refers to a second radio network subsystem corresponding to a small-cell radio network subsystem with at least one small cell comprising:
- a small-cell gateway
- connection means for establishing a communication interface between the small-cell gateway and at least one small-cell base station router on one side and with a core network on the other side,
characterized in that the connection means are also adapted for establishing a set up parameter exchange interface between the small-cell gateway and a radio network controller of a neighbouring macro-cell of a first radio network subsystem working independently from the small-cell radio network subsystem, the said small-cell gateway being configured to receive radio link set up information including physical layer parameters information sent from the radio network controller of the first radio network subsystem through the set up parameter exchange interface when a user equipment connected to the neighbouring macro-cell of the first radio network subsystem is located within the coverage area of the at least one small-cell base station router of the small-cell radio network subsystem and establishes a radio link with said at least one small-cell base station router
and wherein the small-cell radio network subsystem also comprises:
- reception means for receiving coded E-DCH control channel information transmitted on the uplink physical layer by the user equipment connected to the neighbouring macro-cell,
- processing means adapted for:
   - decoding the received coded E-DCH control channel information based on the received radio link set up information,
   - estimating the interference level produced by the said user equipment in the small cell operated by the at least one small-cell base station router controlled by the small-cell gateway based on the decoded E-DCH control channel information,
   - establishing a downlink connection between said user equipment and the at least one small-cell base station router based on the received radio link set up information and sending a request through the established downlink connection to the said user equipment for reducing its uplink power level if the estimated interference level reaches a predefined threshold.

According to another aspect of the present invention, the small-cell gateway is also configured for transmitting radio link set up information including physical layer parameters information to the macro-cell radio network subsystem through the set up parameter exchange interface when a user equipment connected to one of the at least one small-cell base station router controlled by the small-cell gateway is located within the coverage area of a neighbouring macro-cell.

According to another aspect of the present invention, the set up parameter exchange interface is an Iur interface and wherein the radio link set up information corresponds to a Radio Network Subsystem Application Part "RNSAP" radio link "RL" set up information.

Another example useful for understanding the present invention also refers to a heterogeneous wireless cellular network comprising:
- a first radio network subsystem with at least one macro-cell providing a first coverage area,
- a second radio network subsystem corresponding to a small-cell radio network subsystem with at least one small-cell independent from the first radio network subsystem and providing a second coverage area overlapping at least partially the first coverage area, wherein the first radio network subsystem comprises a radio network controller and connection means adapted for establishing a communication interface between the radio network controller and at least one macro base station operating the at least one macro-cell on one side and a core network on the other side,
   wherein the second radio network subsystem comprises a small-cell gateway and connection means for establishing a communication interface between the small-cell gateway and at least one small-cell base station router operating the at least one small cell on one side and with a core network on the other side,
   wherein the radio network subsystems comprise means configured for:
   - establishing a set up parameter exchange interface between the radio network controller of the first radio network subsystem and the small-cell gateway of the second radio network subsystem,
   - receiving by the small-cell gateway radio link set up information including physical layer parameters information through the established interface when a non-serving user equipment of the at least one small-cell base station router connected to the at least one macro base station is located within the coverage area of the at least one small cell and establishes a radio link with said at least one small-cell base station router or receiving by the radio network controller radio link set up information including physical layer parameters information through the established interface when a non-serving user equipment of the at least one macro base station connected to the at least one small-cell base station router is located within the coverage area of the at least one macro-cell and establishes a radio link with said at least one macro base station,
   characterized in that the radio network subsystems also comprise means configured for:
   - receiving by the at least one small-cell station router coded E-DCH control channel information from a non-serving user equipment of the at least one small-cell base station router or receiving by the at least one macro base station coded E-DCH control channel information from a non-serving user equipment of the at least one macro base station,
   - decoding by the at least one small-cell base station router or by the at least one macro base station the received coded E-DCH control channel information based on exchanged radio link set up information,
   - estimating by the at least one small-cell base station router or by the at least one macro base station the uplink interference level produced by a non-serving user equipment of the at least one small-cell base station router or of the at least one macro base station located within the overlapping part of the coverage area of the first and the second radio network subsystem based on the decoded E-DCH control channel information,
- establishing by the at least one small-cell base station router or by the at least one macro base station a downlink connection with a non-serving E-DCH user equipment of the at least one small-cell base station router or of the at least one macro base station based on received radio link set up information and sending by the at least one small-cell base station router or by the at least one macro base station through the established downlink connection to this user equipment a request to reduce its uplink power level if the estimated uplink interference level produced by the said user equipment reaches a predetermined threshold.

### BRIEF DESCRIPTION OF THE DRAWINGS

FIG.**1** is a diagram of a network part comprising neighbouring macro-cells and femto-cells;
FIG.**2** is a diagram of the architecture of a wireless network;
FIG.**3** is a diagram of the different steps of a first embodiment according to the present invention;
FIG.**4** is a diagram of the different steps of a second embodiment of the present invention;
FIG.**5** is the diagram of the network part of Fig.1 with a user equipment in a first position;
FIG.**6** is the diagram of the network part of Fig.1 with a user equipment in a second position;
FIG.**7** is a diagram of the distribution of the different types of interferences produced at a femto base station;

### DETAILED DESCRIPTION OF THE INVENTION

As used herein, the term "RNC" refers to the acronym Radio Network Controller and corresponds to a network element of the radio access network that is connected to the core network and that manages the radio resources of the at least one base station connected to it. The RNC also allows the mobility of the user equipment between the different base stations.

As used herein, the term "RNS" refers to the acronym Radio Network Subsystem and corresponds to an equipment gathering a radio network controller (RNC) and a base station or node B. Specifically, in the following description, the term RNS is used for a macro-cell to define the combination of a macro-base station with an RNC and for the femto-cell to define the combination of a femto gateway and a base station router comprising itself a femto base station and a RNC.

As used herein, the term "uplink" refers to the signals transmitted from a user equipment toward the radio access network. The uplink interferences refer to interferences produced by the uplink signals at the base stations of the radio access network. Conversely, the term "downlink" refers to the signals transmitted from the radio access network towards user equipments.

As used herein the term "neighbouring cells" refers to cells having coverage areas that are at least partially overlapping each other;

As used herein, the term "user equipment" refers to any equipment capable of establishing a wireless connection with a base station. A user equipment is for example a phone, a smartphone, a personal digital assistant or a computer.

As used herein the term "soft handover" refers the connection of a user equipment to two base stations at the same time. The soft handover mechanism aims at producing smooth transitions between the different cells when the user equipment is moving through the network.

As used herein, the term "serving RNC" defines the RNC that controls the connection of a user equipment to the network and that manages the exchanges between the user equipment and the core network. A "drift RNC" defines a RNC that transmits the signals received from a user equipment to the serving RNC in the case of a soft handover. The "serving base station" and by extension the "serving cell" refers to the base station, respectively the cell, which provides the signal having the best signal quality to the serving RNC. The "drift base station" or "drift cell" refers to the base station, respectively the cell, that provides a signal destined to be combined with the signal transmitted by the serving base station, respectively the serving cell. A "non-serving base station", respectively "a non-serving cell", refers to a base station, respectively a cell, which is neither a serving nor a drift base station, respectively neither a serving nor a drift cell. By extension, a non-serving user equipment for a base station, a cell, or a RNC is a user equipment for which the said base station, the cell or the RNC is a non-serving base station, a non-serving cell or a non-serving RNC.

As used herein, the term "E-DCH" refers to the acronym Enhanced Dedicated Channel and is a channel defined in the 3GPP specifications. By extension, the term "E-DCH user equipment" refers to an equipment using an E-DCH to transmit information with a base station.

As used herein the term "absolute grant" is a parameter of the E-DCH that refers to the absolute value of the maximum permitted power level for the E-DCH.

As used herein, the term "relative grant" is a parameter of the E-DCH which indicates to the user equipment whether to increase, decrease or keep unchanged the transmit power level of the E-DCH.

As used herein, the term "small-cell" refers to cells having a small coverage area with respect to macro-cells and cells that work independently with respect to the macro-cells. The small-cells comprise for example micro-cells, femto-cells or pico-cells.

As used herein, the terms "Iu interface", "Iur interface", "Iub interface", "Iuh interface" and "Uu interface" refer to interfaces between network entities and are defined in the 3GPP specifications.

The embodiments of the present invention refer to a method for reducing the uplink interferences produced by non-serving user equipments in a heterogeneous network comprising first and second radio network subsystems that work independently from each other, providing two independent sets of cells, for example a macro-cell network and a small-cell network. The fact that both networks work independently means that no automatic connection need to be established between them to allow their functioning and that there is no centralized controller to manage both networks.

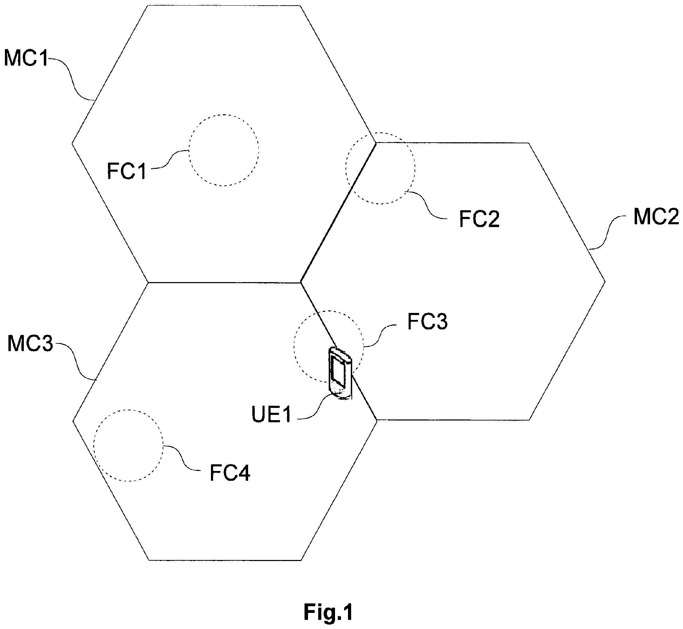

Fig.1 shows an example of heterogeneous network comprising three macro-cells referenced MC1, MC2 and MC3 and four femto-cells FC1, FC2, FC3 and FC4 that are located at least partially within the coverage area of a macro-cell. Besides, it has to be noted that in reality, the coverage area of the macro-cells is larger than the represented hexagons so that two neighbouring macro-cells are overlapping to avoid signal losses at the border between two macro-cells. Furthermore, a soft handover mechanism provides a smooth transition between two neighbouring cells that is not noticeable by the user. It has also to be noted that other types of cells than macro-cells and femto-cells could be used, for example micro-cells, pico-cells or any network wherein the cells work independently from the macro-cells and wherein the RNC can be connected to the macro RNC.

In Fig.1, a user equipment UE1 is also represented. UE1 is located within the coverage area of two macro-cells MC2 and MC3 as well as in the coverage area of the femto-cell FC3. However, in such case, the user equipment UE1 is not necessarily connected to the femto-cell FC3, for example due to a restricted access of FC3 to authorized users or because the user equipment UE1 is configured to be connected in priority or exclusively to macro-cells. Thus, in the present example, UE1 is attached to MC3 which is its serving cell and is also attached to MC2 by soft handover mechanism, MC2 is therefore a drift cell. UE1 is therefore a non-serving user equipment for FC3. As a consequence, the uplink signal transmitted by UE1 toward the macro base stations of MC2 and MC3 is also received in FC3 but cannot be decoded by the base station of FC3 and produces interferences at the femto base station of FC3.

In the embodiments of the present invention, in order to give to FC3 the possibility to determine the contribution of UE1 in the interferences produced at the femto base station of FC3 and to give to FC3 the capacity to reduce the power level of UE1 if necessary to limit the amount of interferences, an interface is set up between the serving macro-cells MC3 and the femto-cell FC3 and radio link set up information are transmitted through the established interface.

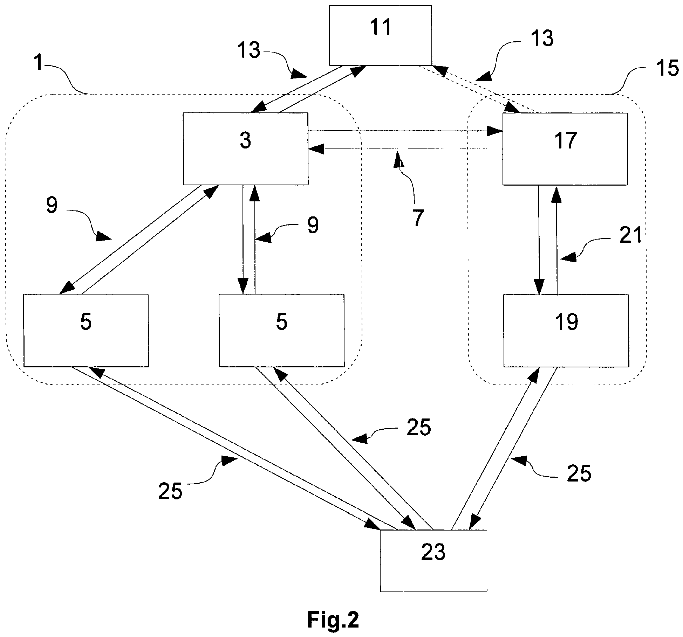

Fig.2 represents the architecture of the radio access network for MC2, MC3 and FC3. The architecture can be divided into two parts, a first part on the left corresponding to the macro-cell part and a second part on the right corresponding to the femto-cell part.

On the macro-cell side, the macro RNS 1 comprises a RNC 3 that controls the macro base stations, also called Node Bs, 5 through Iub interfaces 9. The RNC 3 is also connected to the core network 11 through an Iu interface 13.

On the femto-cell side, the femto RNS 15 comprises a femto gateway 17 and a base station router 19 that gathers a femto RNC and a femto base station. The femto gateway 17 and the base station router 19 are linked by an Iuh interface 21. The femto gateway 17 is also connected to the core network 11 through an Iu interface 13 but this interface is activated only if there is user equipments served by FC3. The interface 7 between the macro RNC 3 and the femto gateway 17 will be described in more details in the following of the description.
The above mentioned interfaces are established by connection means which refer, for example, to optical transceivers coupled with analog to digital and digital to analog signal converters and digital processing means. These connection means emit and receive optical signals that are transmitted through optical fibers. Wireless connections may also be used for establishing these interfaces which are logical interfaces.
The radio connection between the user equipment 23 and the macro base stations 5 or the femto base station router 19 is an Uu interface 25. This radio connection is established by communication means, notably reception means comprising an antenna, an analog to digital signal converter and processing means to process the received signal.

Besides, the macro RNS is informed of the presence of the neighbouring femto-cells located within its coverage area. Such information may be provided by configuration of the macro-RNC by an operation and maintenance center (OMC) of the core network or by automatic neighbor relation (ANR) mechanism. Similarly, the femto RNS is informed of the presence of the neighbouring macro-cells.

Furthermore, in the radio network subsystems, the uplink signals transmitted by the user equipments 23 and coded according to a WCDMA protocol are decoded in the RNS 1, 15 by dedicated algorithms powered by processing means.

The different processing means of the radio network subsystems are provided through the use of dedicated hardware as well as hardware capable of executing software in association with appropriate software. When providing by a processor, the processing means may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardwares, conventional and/or custom, may also be included. These dedicated algorithms need to be configured using set up parameters provided to the serving RNC by the core network in order to be able to decode the received uplink signals.

Based on the network structure described previously, two different situations may occur leading to two different embodiments. A first embodiment wherein the user equipment 23 is connected to the macro-cell and produces uplink interferences into the femto-cell and a second embodiment wherein the user equipment 23 is connected to the femto base station and produces uplink interferences into the macro-cell.

A preliminary step 100 which is common to both embodiments is the establishment of a set up parameter exchange interface between the macro RNS and the femto RNS and more precisely the establishment of an Iur interface 7 between the macro RNC 3 and the femto gateway 17. Such establishment is achieved at the installation or setting up of the network through provisioning mechanisms to declare the interface.

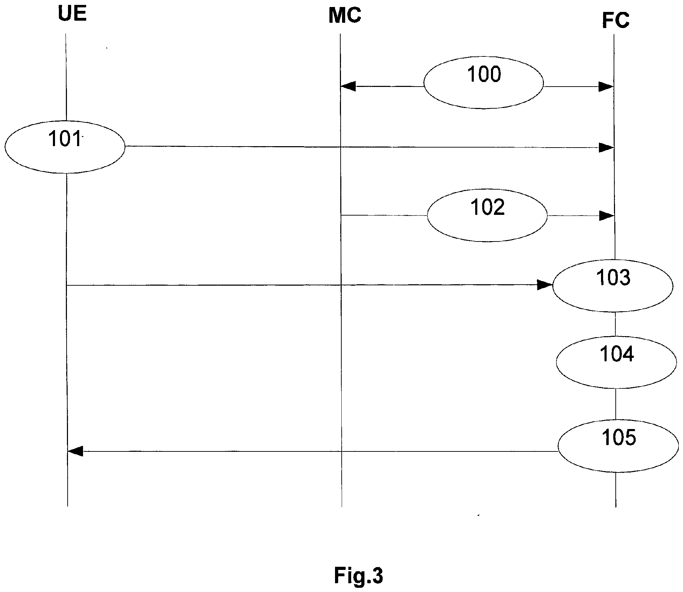

The different steps of the method according to the first embodiment will now be described based on the diagram of fig.3 in the case of a network based on a Wideband Code Division Multiple Access (WCDMA) protocol wherein the uplink physical layer comprises an enhanced dedicated channel (E-DCH). In Fig.3, the vertical lines represent entities corresponding respectively to a user equipment 23 noted UE, a macro-cell and its associated equipments (base station, RNC...) noted MC and a femto-cell and its associated equipments (base station router, femto gateway..) noted FC. The horizontal arrows represent the interaction between the different entities.

The user equipment UE is initially attached to a base station of a macro-cell MC. The base station being part of a macro RNS comprising also the RNC. Furthermore, the user equipment UE may also be connected to a second base station in the case of a soft handover. In this case, the second base station acts as a drift base station while the first base station acts as a serving base station for the user equipment UE.

The first step 101 refers to the establishment of a radio link between the user equipment UE attached to the base station of the macro-cell MC and a neighbouring femto-cell FC. Such establishment is triggered by the user equipment UE that detects the downlink signal transmitted by the base station of the neighbouring femto-cell FC. If the received signal strength is above a predetermined level, a radio link can be established between the user equipment UE and the base station of the femto-cell FC. The serving RNC of the macro-cell MC will then add a radio link between the user equipment and this femto-cell base station.

The second step 102 refers to the transmission through the interface established at step 100 of radio link set up information including physical layer parameters information from the macro RNC to the femto gateway. This information corresponds to radio network subsystem application part radio link (RNSAP RL) set up information and is then transmitted by the femto gateway to the base station router of the target femto-cell FC which is the femto-cell FC with which the radio link has been established. This transmission of parameters occurs as soon as the radio link of step 101 is established.

The third step 103 refers to the configuration of the base station router based on the transmitted radio link information to decode the control channel information. Indeed, using the transmitted information, the base station router can be configured to decode the control channel information transmitted on the uplink physical layer by the user equipment UE which corresponds to the signal that produce the interferences at the femto base station. This information corresponds to E-DCH control channel information transmitted through an E-DCH Dedicated Physical Control Channel (E-DPCCH). The E-DPCCH is transmitted along with a data channel (E-DPDCH) and provides parameters to allow the decoding of the data. Among these parameters, the E-DPCCH comprises the power level used by the user equipment UE, for the uplink transmission. Furthermore, the data channel is not decoded as the goal is to provide a power level control. This appears to be a major difference with respect to a soft handover. As only a fraction of the signals received on the E-DCH are decoded (only the E-DPCCH part), the required processing capacity is reduced with respect to the implementation of a full soft handover mechanism wherein the data (E-DPDCH part) are also decoded to be combined with the data received by the serving RNC.

The fourth step 104 refers to the estimation of the uplink interference level produced by the user equipment UE at the base station of the femto-cell FC.
Indeed, by decoding the E-DPCCH, the base station router has access to parameters such as the uplink scrambling code or the uplink power offset used by the non-serving user equipment for the E-DCH channels. Based on these parameters, the base station router is able to determine the contribution of the said user equipment in the non-serving interference level. Thus, if several user equipments of neighbouring cells produce non-serving uplink interferences, the base station router is capable of determining which of the non-serving user equipments produce the more interferences and therefore to determine which user equipments need to reduce their power level to decrease the overall uplink interference level produced by non-serving user equipments below an acceptable level.

The fifth step 105 refers to the sending, from the base station router to the user equipment UE, of a request to reduce its uplink power level. For example, a maximum interference level threshold can be set and if the estimated interference level of a user equipment is above this threshold, a relative grant is sent from the base station router to this user equipment UE to decrease its power level. This threshold may be an absolute threshold or a relative threshold with respect to the interference level produced by other user equipments. The threshold may also be dependent of the overall level of interferences detected at the femto-cell base station. This relative grant is sent on a E-DCH downlink connection. Indeed, with the received E-DCH control channel information, the femto base station router can establish a downlink connection with the non-serving user equipment and transmit a relative grant to go down concerning its power level.

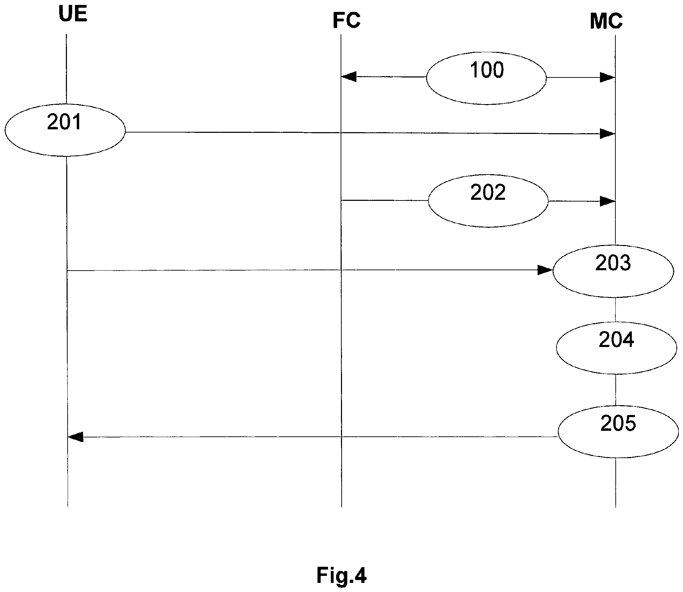

According to a second embodiment, the user equipment UE is attached to the femto-cell FC and produces uplink non-serving interferences in the neighbouring macro-cell MC. The corresponding steps of the method will now be described based on the diagram of Fig.4. In this embodiment, the network is also based on a Wideband Code Division Multiple Access (WCDMA) protocol wherein the uplink physical layer comprises an enhanced dedicated channel (E-DCH).

The first step 201 refers to the establishment of a radio link between the user equipment UE attached to the base station of the femto-cell FC and a neighbouring macro-cell MC. Such establishment is triggered by the user equipment that detects the downlink signal transmitted by the base station of the neighbouring macro-cell. If the received signal strength is above a predetermined level, a radio link can be established between the user equipment UE and the base station of the macro-cell MC. The serving base station of the femto-cell FC will add a radio link between the user equipment UE and this macro-cell base station.

The second step 202 refers to the transmission through the interface established at step 100 of radio link set up information including physical layer parameters information from the femto gateway to the macro RNC. This information corresponds to radio network subsystem application part radio link (RNSAP RL) set up information. This transmission of parameters occurs as soon as the radio link of step 201 is established.

The third step 203 refers to the configuration of the macro base station based on the transmitted radio link information to decode the control channel information. Indeed, using the transmitted information, the macro base station can be configured to decode the control channel information transmitted on the uplink physical layer by the user equipment UE which corresponds to the signal that produces the interferences at the macro base station. This information corresponds to E-DCH control channel information transmitted through an E-DCH Dedicated Physical Control Channel (E-DPCCH). The E-DPCCH is transmitted along with a data channel (E-DPDCH) and provides parameters to allow the decoding of the data. Among these parameters, the E-DPCCH comprises the power level used by the user equipment, herein called UE1, for the uplink transmission. Furthermore, the data channel is not decoded as the goal is to provide a power level control.

The fourth step 204 refers to the estimation of the uplink interference level produced by the user equipment UE at the base station of the macro-cell MC.
Indeed, by decoding the E-DPCCH, the macro base station has access to parameters such as the power level used by the non-serving user equipment UE in order to determine the contribution of the said user equipment UE in the non-serving interference level. Thus, if several user equipments of neighbouring cells produce non-serving uplink interferences, the macro base station is capable of determining which of the non-serving user equipments produce the more interferences and therefore to determine which user equipments need to reduce their power level to decrease the overall uplink interference level produced by non-serving user equipments below an acceptable level.

The fifth step 205 refers to the sending, from the macro base station to the user equipment UE, of a request to reduce its uplink power level. For example, a maximum interference level threshold can be set and if the estimated interference level of a user equipment UE is above this threshold, a relative grant is sent from the macro base station to this user equipment UE to decrease its power level. This threshold may be an absolute threshold or a relative threshold with respect to the interference level produced by other user equipments. The threshold may also be dependent of the overall level of interferences detected at the femto-cell base station. This relative grant is sent on a E-DCH downlink connection. Indeed, with the received E-DCH control channel information, the macro base station can establish a downlink connection with the non-serving user equipment and transmit a relative grant to go down concerning its power level.

In order to better understand the present invention, an example will now be described based on the network portion presented in Fig.1.

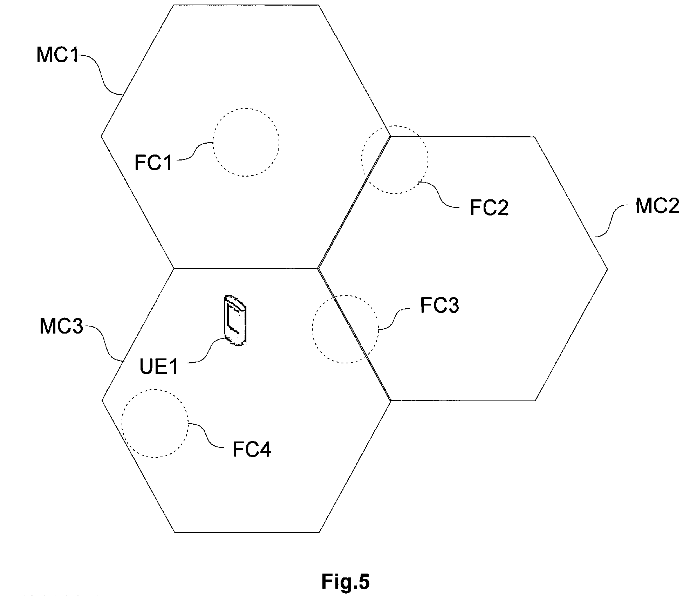

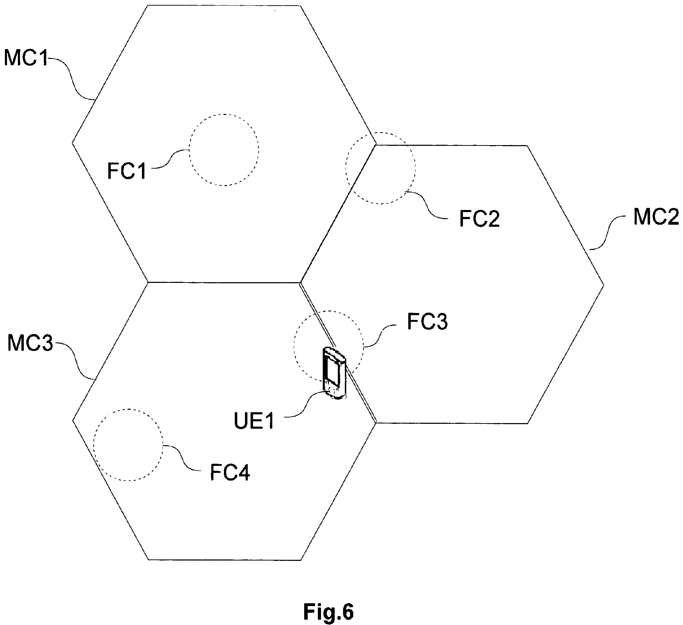

The user and its user equipment UE1 is initially located as presented in Fig.5 and is attached to the macro-cell MC3 which is its serving base station. The user moves then to the position represented in Fig.6 and enters therefore the coverage areas of the macro-cell MC2 and the femto-cell FC3. However, UE1 keeps MC3 as its serving cell. Besides, a soft handover is established with MC2 so that the base station of MC2 becomes a drift base station and MC3 remains the serving base station. Furthermore, as UE1 is at the border between two cells, UE1 is located pretty far from the base stations of MC3 or MC2 so that a high power level is required to produce an acceptable signal to noise ratio at the RNC managing MC3 and MC2. A maximum power level is set by the base station of MC3 through the sending of an absolute grant to UE1 so that the power level of UE1 may be increased through the sending of relative grants from MC3 but only up to the maximum threshold determined by the absolute grant. However, this level may be sufficient to produce a high amount of interferences at the femto base station of FC3 due to the short distance existing between UE1 and the said femto base station when UE1 is located within the coverage area of FC3.

As a consequence, when UE1 is in this position, the uplink signals sent by UE1 may produce a high level of interferences at the base station of FC3.

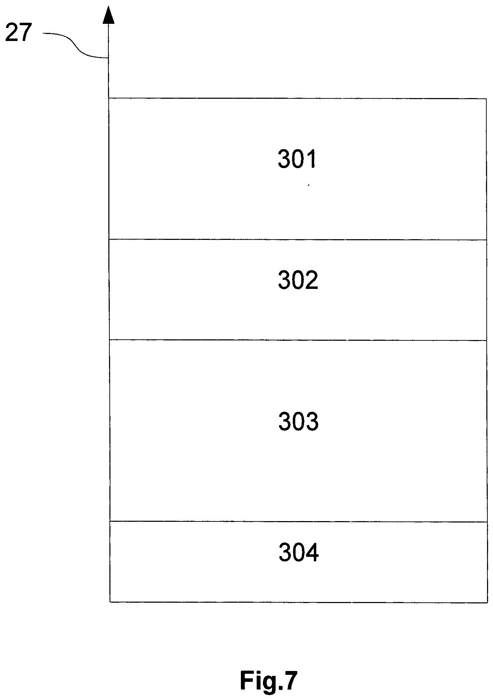

Fig.7 represents a diagram of the uplink load of interferences 27. The total load is divided into four main parts.
- The first part 301 corresponds to the interference load produced by the serving E-DCH users, that is to say, the users that are attached to the femto base station and that use a WCDMA protocol. As there is a connection with the serving user equipment, the serving E-DCH load can be controlled by the femto base station.
- The second part 302 corresponds to the non-serving E-DCH users and is the part of interest of the present invention as it corresponds to user equipments attached to neighbouring cells and producing interferences at the femto base station.
- The third part 303 corresponds to non E-DCH users.
- The fourth part 304 corresponds to the background interference, that is to say the interferences produced by other sources than the sources described in the first three parts.

With the embodiments of the present invention, when UE1 is located within the coverage area of FC3, UE detects the downlink signals transmitted by the base station of FC3 and establishes a radio link with the base station of FC3. MC3 receives signals form the UE indicating that UE has established a radio link connection with FC3. This radio link connection triggers the transmission of RNSAP RL set up information to the femto base station through the Iur interface established previously at the setting up of the network. The Iur interface can be considered as a "light" Iur interface with respect to an Iur interface established for soft handover as only RNSAP RL set up information are transmitted, that is to say set up information to decode the E-DPCCH channel of the uplink E-DCH (the uplink channel corresponding to the data (E-DPDCH) is not decoded). As a consequence, the amount of signals transmitted through the Iur interface is limited and the processing capacity necessary for the femto base station is also limited as only a part of the uplink signals transmitted by UE1 is decoded.

Thus, if the interference level corresponding to the non serving E-DCH users (second part 302 of the diagram of Fig.7) becomes too high, the femto base station uses the RNSAP RL set up information to determine the power level of the non-serving E-DCH user equipments, such as UE1. Thanks to the set up information including physical parameters information provided by the macro RNC, the femto base station is capable of decoding the E-DPCCH which comprises among other parameters the power level used by UE1. From the power level, the level of interferences produced at the femto base station can be estimated and if this level is high with respect to the other non-serving E-DCH users or if the total non-serving E-DCH load is too high, the femto base station determines that UE1 is responsible for the high level of interferences produced by non-serving E-DCH user equipments. In order to reduce the amount of interferences, the femto base station sends a relative grant to UE1 to decrease its power level. Indeed, with the RNSAP RL set up information, the femto base station is also capable of establishing a downlink E-DCH with UE1 to send it a relative grant.

Besides, it has to be noted that if a user equipment receives several relative grants, for example one from the serving macro base station to go up, that is to say to increase its power level and one from the femto base station to go down, that is to say to decrease its power level, the relative grant to go down has priority on the relative grant to go up and the user equipment decreases its power level. Such functioning allows avoiding to be most of the time at the maximum power level defined by the absolute grant which would create a high amount of interferences in the neighbouring cells due to the wind-up effect.

UE1 then receives the relative grant to go down from the femto base station and decreases its power level leading to a reduction of the amount of interferences produced at the femto base station.

As described previously, the same scenario may be applied wherein UE1 is initially connected to the femto base station and creates interferences in the neighbouring macro-cell MC3 so that an Iur interface is established to allow the macro base station determining the amount of interferences produced by UE1 and sending a relative grant to reduce its power level if necessary.

Furthermore, it has to be noted that as the data channel is not decoded, there is no transmission of data to the serving base station and therefore no combining of signals at the serving base station. As a consequence, the amount of necessary processing resources in the radio access network (RAN) as well as in the backhaul is reduced with respect to a soft handover procedure.

Thus, the embodiments of the present invention by establishing an interface between two RNS corresponding to two independent cells, when a user equipment is located in an overlapping coverage area of both cells, allows the non-serving cell determining the power features of the user equipment and if necessary sending a relative grant to reduce its power level leading to an improved management of the overall interference level within heterogeneous networks. Moreover, the implementation of such interaction between independent cells to provide efficient power control requires a reduced processing capacity, notably in the backhaul, with respect to the implementation of a soft handover procedure.

## Claims

1. Method for reducing the uplink interferences produced by non-serving user equipments (23) using an enhanced-dedicated channel "E-DCH" in a heterogeneous wireless cellular communication network comprising a first and a second radio network subsystems (1, 15) that are independent and that present coverage areas that are at least partially overlapping,
wherein the first radio subsystem comprises a radio network controller (3) establishing a communication interface with at least one macro base station (5) operating at least one macro-cell on one side and with a core network (11) on the other side,
wherein the second radio network subsystem comprises a small-cell gateway (17) establishing a communication interface with at least one small-cell base station router (19) operating at least one small cell on one side and with a core network (11) on the other side,
wherein it comprises the following steps:
- establishing a set up parameter exchange interface (7) between the radio network controller (3) of the first radio network subsystem (1) and the small-cell gateway (17) of the second radio network subsystem (15),
- when a user equipment attached to the first radio network subsystem (1, 15) is located in the coverage area of the second radio network subsystem (1, 15) and establishes a radio link with the second radio network subsystem, transmitting, through the established interface (7), radio link set up information including physical layer parameters information from the first radio network subsystem to the second,
**characterized in that** it also comprises the following steps:
- receiving by the second radio network subsystem (1, 15) uplink coded E-DCH control channel information sent from the user equipment,
- configuring the second radio network subsystem (1, 15) based on the transmitted radio link set up information in order to decode the received E-DCH control channel information,
- estimating the uplink interference level produced by the user equipment (23) in the second radio network subsystem based on the decoded E-DCH control channel information,
if the estimated uplink interference level in the second radio network subsystem reaches a predetermined threshold,
- establishing a downlink connection between the second radio subsystem and the user equipment based on the transmitted radio link set up information and sending through the established downlink connection a request to reduce the uplink power level of the said user equipment.

2. Method in accordance with claim 1 wherein the first radio network subsystem (1) provides a macro-cell coverage and comprises at least one macro base station (5) and a radio network controller (3) and wherein the second radio network subsystem (15) provides a small-cell coverage and comprises a small-cell base station router (19) and a small-cell gateway (17).

3. Method in accordance with one of the previous claims wherein the wireless cellular communication network is based on a Wideband Code Division Multiple Access "WCDMA" protocol.

4. Method in accordance with claim 3 wherein the interface established between the first (1, 15) and the second (1, 15) radio network subsystem is an Iur interface (7) established between the small-cell gateway (17) and the radio network controller (3) of the radio network subsystem (1) providing a macro-cell coverage.

5. Method in accordance with claim 3 or 4 wherein the radio link set up information transmitted through the established interface (7) corresponds to Radio Network Subsystem Application Part "RNSAP" radio link "RL" set up information.

6. Method in accordance with one of the previous claims wherein the predetermined threshold corresponds to a predetermined interference level threshold.

7. Method in accordance with one of the previous claims wherein the request to reduce the uplink power level corresponds to a relative grant to reduce the uplink power level.

8. A first radio network subsystem (1) with at least one macro-cell comprising:
- a radio network controller (3),
- connection means adapted for establishing a communication interface between the radio network controller and at least one macro base station (5) on one side and with a core network (11) on the other side,
**characterized in that** the connection means are also adapted for establishing a set up parameter exchange interface (7) between the radio network controller (3) and a small-cell gateway (17) of a of a second network subsystem that works independently from the first radio network subsystem and that corresponds to a small-cell radio network subsystem (15) of a neighbouring small-cell, the radio network controller (3) being configured to transmit radio link set up information including physical layer parameters information to the small-cell gateway (17) of the small-cell radio network subsystem (15) through the set up parameter exchange interface (7) when a user equipment (23) connected to one of the at least one macro base station (5) is located within the coverage area of the neighbouring small-cell wherein the radio network controller (3) is also configured for receiving radio link set up information including physical parameters information from the small cell gateway (17) of the small-cell radio subsystem (15) through the set up parameter exchange interface (7) when a user equipment (23) connected to the neighbouring small-cell of the small-cell radio network subsystem (15) is located within the coverage area of the at least one macro base station (5) and wherein the radio network subsystem (1) also comprises:
- reception means for receiving coded E-DCH control channel information transmitted on the uplink physical layer by a user equipment (23) connected to the neighbouring small-cell,
- processing means adapted for:
- decoding the received coded E-DCH control channel information based on the received radio link set up information,
- estimating the interference level produced by the said user equipment (23) in a macro-cell operated by the at least one macro base station (5) controlled by the radio network controller (3) based on the decoded E-DCH control channel information
- establishing a downlink connection between the user equipment (23) and the at least one macro base station (5) based on the received radio link set up information and sending a request through the established downlink connection to the said user equipment (23) for reducing its uplink power level if the estimated interference level reaches a predetermined threshold.

9. A first radio network subsystem (1) in accordance with claim 8 wherein the set up parameter exchange interface (7) is an Iur interface and wherein the radio link set up information corresponds to a Radio Network Subsystem Application Part "RNSAP" radio link "RL" set up information.

10. A second radio network subsystem (15) corresponding to a small-cell radio network subsystem (15) with at least one small cell comprising:
- a small-cell gateway (17)
- connection means for establishing a communication interface between the small-cell gateway and at least one small-cell base station router (19) on one side and with a core network (11) on the other side,
**characterized in that** the connection means are also adapted for establishing a set up parameter exchange interface (7) between the small-cell gateway (17) and a radio network controller (3) of a neighbouring macro-cell of a first radio network subsystem working independently from the small-cell radio network subsystem, the said small-cell gateway (17) being configured to receive radio link set up information including physical layer parameters information sent from the radio network controller (3) of the first radio network subsystem through the set up parameter exchange interface (7) when a user equipment (23) connected to the neighbouring macro-cell of the first radio network subsystem is located within the coverage area of the at least one small-cell base station router (19) of the small-cell radio network subsystem (15) and establishes a radio link with said at least one small-cell base station router (19)
and wherein the small-cell radio network subsystem (15) also comprises:
- reception means for receiving coded E-DCH control channel information transmitted on the uplink physical layer by the user equipment (23) connected to the neighbouring macro-cell,
- processing means adapted for:
- decoding the received coded E-DCH control channel information based on the received radio link set up information,
- estimating the interference level produced by the said user equipment (23) in the small cell operated by the at least one small-cell base station router (19) controlled by the small-cell gateway (17) based on the decoded E-DCH control channel information,
- establishing a downlink connection between said user equipment (23) and the at least one small-cell base station router (19) based on the received radio link set up information and sending a request through the established downlink connection to the said user equipment (23) for reducing its uplink power level if the estimated interference level reaches a predefined threshold.

11. A second radio network subsystem (15) in accordance with claim 10 wherein the small-cell gateway (17) is also configured for transmitting radio link set up information including physical layer parameters information to the macro-cell radio network subsystem (1) through the set up parameter exchange interface when a user equipment (23) connected to one of the at least one small-cell base station router (19) controlled by the small-cell gateway (17) is located within the coverage area of a neighbouring macro-cell.

12. A second radio network subsystem (1) in accordance with claim 11 wherein the set up parameter exchange interface (7) is an Iur interface and wherein the radio link set up information corresponds to a Radio Network Subsystem Application Part "RNSAP" radio link "RL" set up information.

13. Heterogeneous wireless cellular network comprising:
- a first radio network subsystem (1) with at least one macro-cell providing a first coverage area,
- a second radio network subsystem (15) corresponding to a small-cell radio network subsystem with at least one small-cell independent from the first radio network subsystem and providing a second coverage area overlapping at least partially the first coverage area,
wherein the first radio network subsystem (1) comprises a radio network controller (3) and connection means adapted for establishing a communication interface between the radio network controller and at least one macro base station (5) operating the at least one macro-cell on one side and a core network (11) on the other side,
wherein the second radio network subsystem (15) comprises a small-cell gateway (17) and connection means for establishing a communication interface between the small-cell gateway (17) and at least one small-cell base station router (19) operating the at least one small cell on one side and with a core network (11) on the other side,
wherein the radio network subsystems (1, 15) comprise means configured for:
- establishing a set up parameter exchange interface (7) between the radio network controller (3) of the first radio network subsystem (1) and the small-cell gateway (17) of the second (15) radio network subsystem,
- receiving by the small-cell gateway (17) radio link set up information including physical layer parameters information through the established interface (7) when a non-serving user equipment (23) of the at least one small-cell base station router (19) connected to the at least one macro base station (5) is located within the coverage area of the at least one small cell and establishes a radio link with said at least one small-cell base station router (19) or receiving by the radio network controller (3) radio link set up information including physical layer parameters information through the established interface (7) when a non-serving user equipment (23) of the at least one macro base station (5) connected to the at least one small-cell base station router (19) is located within the coverage area of the at least one macro-cell and establishes a radio link with said at least one macro base station (5),
**characterized in that** the radio network subsystems also comprise means configured for:
- receiving by the at least one small-cell station router (19) coded E-DCH control channel information from a non-serving user equipment (23) of the at least one small-cell base station router (19) or receiving by the at least one macro base station (5) coded E-DCH control channel information from a non-serving user equipment (23) of the at least one macro base station (5),
- decoding by the at least one small-cell base station router (19) or by the at least one macro base station (5) the received coded E-DCH control channel information based on exchanged radio link set up information,
- estimating by the at least one small-cell base station router (19) or by the at least one macro base station (5) the uplink interference level produced by a non-serving user equipment (23) of the at least one small-cell base station router (19) or of the at least one macro base station (5) located within the overlapping part of the coverage area of the first (1) and the second (15) radio network subsystem based on the decoded E-DCH control channel information,
- establishing by the at least one small-cell base station router (19) or by the at least one macro base station (5) a downlink connection with a non-serving E-DCH user equipment (23) of the at least one small-cell base station router (19) or of the at least one macro base station (5) based on received radio link set up information and sending by the at least one small-cell base station router (19) or by the at least one macro base station (5) through the established downlink connection to this user equipment (23) a request to reduce its uplink power level if the estimated uplink interference level produced by the said user equipment reaches a predetermined threshold.

## Patentansprüche

1. Verfahren zum Verringern der Uplink-Interferenzen, die von Non-serving Benutzergeräten (23) erzeugt werden, unter Verwendung eines erweitert-dezidierten Kanals "E-DCH" in einem heterogenen Mobilfunkkommunikationsnetz, das ein erstes und ein zweites Funknetzubsystem (1, 15) aufweist, die voneinander unabhängig sind und mindestens teilweise überlappende Abdeckungsbereiche darstellen,
wobei das erste Funknetzubsystem eine Funknetzsteuereinheit (3) aufweist, die eine Kommunikationsschnittstelle zu mindestens einer Makrobasisstation (5), die mindestens ein Makrozelle betreibt, an der einen Seite und zu einem Kernnetz (11) an der anderen Seite errichtet,
wobei das zweite Funknetzubsystem (15) ein Gateway (17) einer kleinen Zelle aufweist, das eine Kommunikationsschnittstelle zu mindestens einem Router (19) einer Basisstation der kleinen Zelle, die mindestens eine kleine Zelle betriebt, an der einen Seite und zu einem Kernnetz (11) an der anderen Seite errichtet,
wobei das Verfahren die folgenden Schritte aufweist:
- Errichten einer Setupparameter-Austauschschnittstelle (7) zwischen der Funknetzsteuereinheit (3) des ersten Funknetzsubsystems (1) und dem Gateway (17) der kleinen Zelle des zweiten Funknetzsubsystems (15),
- wenn ein dem ersten Funknetzsubsystem (1, 15) zugeordnetes Benutzergerät sich innerhalb von dem Abdeckungsbereich des zweiten Funknetzsubsystems (1, 15) befindet und eine Funkverbindung zu dem zweiten Funknetzsubsystem errichtet, Übertragen von Funkverbindungs-Setupinformationen einschließlich Informationen zu Parametern der physikalischen Schicht vom ersten Funknetzsubsystem zu zweiten Funknetzsubsystem über die errichtete Schnittstelle (7),
**dadurch gekennzeichnet,**
**dass** das Verfahren zudem folgende Schritte aufweist:
- Empfanfgen vom zweiten Funknetzsubsystem (1, 15) von kodierten E-DCH-Steuerkanalinformationen, die vom Benutzergerät Uplink gesendet worden sind,
- Konfigurieren des zweiten Funknetzsubsystem (1, 15), basierend auf den übertragenen Funkverbindungs-Setupinformationen, um die empfangenen E-DCH-Steuerkanalinformationen zu dekodieren,
- Schätzen des vom Benutzergerät (23) im zweiten Funknetzsubsystem erzeugten Uplink-Interferenzniveaus, basierend auf den dekodierten E-DCH-Steuerkanalinformationen,
wenn das geschätzte Uplink-Interferenzniveau im zweiten Funknetzsubsystem einen bestimmten Grenzwert erreicht,
- Errichten einer Downlink-Verbindung zwischen dem zweiten Funksubsystem und dem Benutzergerät, basierend auf den übertragenen Funkverbindungs-Setupinformationen, und Senden einer Anforderung zum Verringern des Uplink-Leistungsniveaus des Benutzergeräts über die errichtete Downlink-Verbindung.

2. Verfahren nach Anspruch 1,
wobei das reste Funknetzsubsystem (1) eine Makrozellenabeckung vorsieht und mindestens eine Makrobasisstation (5) und eine Funknetzsteuereinheit (3) aufweist und wobei das zweite Funknetzubsystem (15) eine Abdeckung der kleinen Zelle vorsieht und einen Router (19) einer Basisstation der kleine Zelle und ein Gateway (17) der kleinen Zelle aufweist.

3. Verfahren nach einem der vorhergehenden Ansprüche,
wobei das Mobilfunkkommunikationsnetz auf einem Breitband-Codemultiplex-verfahren-(Wideband Code Division Multiple Access)- "WCDMA"-Protokoll basiert.

4. Verfahren nach Anspruch 3,
wobei das zwischen dem esten Funknetzsubsystem (1, 15 ) und dem zweiten Funknetzubsystem (1, 15) errichtete Schnittstelle eine Iur-Schnittstelle (7) ist, die zwischen dem Gateway (17) der kleinen Zelle und der Funknetzsteuereinheit (3) des eine Makrozellenabdeckung vorsehenden Funknetzubsystems (1) errichtet wird.

5. Verfahren nach Anspruch 3 oder 4,
wobei die Funkverbindungs-Setupinformationen, die über die errichtete Schnittstelle (7) übertragen werden, Funkverbindungs-"RL"-(Radio Link)-Setupinformationen des Radio Network Subsystem Application Part "RNSAP" entsprechen.

6. Verfahren nach einem der vorhergehenden Ansprüche,
wobei der vorbestimmte Grenzwert einem vorbestimmten Interferenzniveau-Grenzwert entspricht.

7. Verfahren nach einem der vorhergehenden Ansprüche,
wobei die Anforderung zum Verringern des Uplink-Leistungsniveaus einer diesbezüglichen Gewährung zum Verringern des Uplink-Leitungsniveaus entspricht.

8. Erstes Funknetzubsystem (1) mit mindestens einer Makrozelle,
das Folgendes aufweist:
- eine Funknetzsteuereinheit (3),
- Verbindungseinrichtungen, die zum Errichten einer Kommunikationsschnittstelle zwischen der Funknetzsteuereinheit und mindestens eienr Makrobasisstation (5) an der einen Seite und einem Kernnetz (11) and der anderen Seite ausgelegt sind,
**dadurch gekennzeichnet,**
**dass** die Verbindungseinrichtungen auch zum Errichten einer Setupparameter-Austauschschnittstelle (7) zwischen der Funknetzsteuereinheit (3) und einem Gateway (17) der kleinen Zelle von einem zweiten Netzsubsystem ausgelegt ist, das unabhängig vom ersten Funknetzsubsystems arbeitet und das einem Funknetzsubsystem (15) der kleinen Zelle einer benachbarten kleinen Zelle entspricht, die Funknetzsteuereinheit (3) dazu ausgestaltet ist, Funkverbindungs-Setupinformation, einschließlich der Informationen über Parameter der physikalischen Schicht an das Gateway (17) der kleinen Zelle des Funknetzsubsystems (15) der kleinen Zelle über die Setupparameter-Austauschschnittstelle (7) zu übertragen, wenn ein mit einer von der mindestens einen Makrobasisstation (5) verbundenes Benutzergerät (23) sich innerhalb von dem Abdeckungsbereich der benachbarten kleinen Zelle befindet, wobei die Funknetzsteuereinheit (3) auch zum Empfangen von Funkverbindungs-Setupinformationen, einschließlich Informationen zu physikalischen Parametern von dem Gateway (17) der kleinen Zelle von dem Funksubsystem (15) der kleinen Zelle über eine Setupparameter-Austauschnittstelle (7) ausgestaltet ist, wenn ein mit der benachbarten Zelle des Funknetzubsystems (15) der kleine Zelle verbundenes Benutzergerät (23) sich innerhalb von dem Abdeckungsbereich der mindestens einen Makrobasisstation (5) befinder und
wobei das Funknetzsubsystem (1) zudem Folgendes aufweist:
- Empfangseinrichtungen zum Empfangen kodierter E-DCH-Steuerkanalinformationen, die auf der physikalischen Schicht Uplink von einem mit der benachbarten kleinen Zelle verbunden Benutzergerät (23) übertragen werden,
- Verarbeitungseinrichtung, die ausgelegt sind zum:
- Dekodieren der empfangenen kodierten E-DCH-Steuerkanalinformationen, basierend auf den empfangenen Funkverbindungs-Setupinfiormationen,
- Schätzen des Interferenzniveaus, das von dem Benutzergerät (23) in einer Makrozelle erzeugt wird, die von der mindestens einen Makrobasisstation (5) betrieben wird, die von der Funknetzsteuereinheit (3) gesteuert wird, basierend auf den dekodierten E-DCH-Steuerkanalinformationen,
- Errichten einer Downlink-Verbindung zwischen dem Benutzergerät (23) und der mindestens einen Makrobasisstation (5), basierend auf den empfangenen Funkverbindungs-Setupinformationen, und Senden einer Anforderung über die errichtete Downlink-Verbindung an das Benutzergerät (23) zum Verringern seines Uplink-Leitungsniveaus, wenn das geschätzte Interferenzniveau einen vorbestimmten Grenzwert erreicht.

9. Erstes Funknetzsubsystem (1) nach Anspruch 8,
wobei die Setupparameter-Austauschschnittstelle (7) eine Iur-Schnittstelle ist und wobei die Funkverbindungs-Setupinformationen Funkverbindungs-"RL"-(Radio Link)-Setupinformationen des Radio Network Subsystem Application Part "RNSAP" entsprechen.

10. Zweites Funknetzsubsystem (15), das einem Funknetzsubsystem (15) der kleine Zelle mit mindestens einer kleinen Zelle entspricht, das Folgendes aufweist:
- ein Gateway (17) der kleinen Zelle,
- Verbindungseinrichtungen zum Errichten einer Kommunikationsschnittstelle zwischen dem Gateway der kleinen Zelle und mindestens einem Router (19) der Basisstation der kleinen Zelle an der einen Seite und einem Kernnetz (11) an der anderen Seite,
**dadurch gekennzeichnet,**
**dass** die Verbindungseinrichtungen auch zum Errichten einer Setupparameter-Austauschschnittstelle (7) zwischen dem Gateway (17) der kleinen Zelle und einer Funknetzsteuereunheit (3) einer benachbarten Makrozelle eines ersten Funknetzbsystems, das unabhängig vom Funknetzsubsystem der kleinen Zelle arbeitet, ausgelegt sind,
wobei das Gateway (17) der kleinen Zelle dazu ausgestaltet ist, Funkverbindungs-Setupinformationen, einschließlich Informationen zu Parametern der physikalischen Schicht zu empfangen, die von der Funknetzsteuereinheit (3) des ersten Funknetzsubsystems über die Setupparameter-Austauschschnittstelle (7) gesendet worden sind, wenn ein mit der benachbarten Makrozelle des ersten Funknetzsubsystems verbundenes Benutzergerät (23) sich innerhalb von dem Abdeckungsbereich des mindestens einen Routers (19) der Basisstation der kleinen Zelle des Funknetzsubsystems (15) der kleinen Zelle befindet und eine Funkverbindung zu dem mindestens einen Router (19) der Basisstation der kleinen Zelle errichtet, und
woebi das Funknetzsubsystem (15) der kleine Zelle ferner Folgendes aufweist:
- Empfangseinrichtungen zum Empfangen kodierter E-DCH-Steuerkanalinformationen, die auf der physikalischen Schicht Uplink von dem mit der benachbarten Makrozelle verbunden Benutzergerät (23) übertragen werden,
- Verarbeitungseinrichtung, die ausgelegt sind zum:
- Dekodieren der empfangenen kodierten E-DCH-Steuerkanalinformationen, basierend auf den empfangenen Funkverbindungs-Setupinformationen,
- Schältzen des Interferenzniveaus, das von dem Benutzergerät (23) in der kleinen Zelle erzeugt wird, die von dem mindestens einen Router (19) der Basisstation der kleinen Zelle betrieben wird, der vom Gateway (17) der kleinen Zelle gesteuert wird, basierend auf den dekodierten E-DCH-Steuerkanalinformationen,
- Errichten einer Downlink-Verbindung zwischen dem Benutzergerält (23) und dem mindestens eine Rotor (19) der Basisstation der kleine Zelle, basierend auf den empfangenen Funkverbindungs-Setupinformationen, und Senden einer Anforderung über die errichtete Downlink-Verbindung an das Benutzergerät (23) zum Verringern seines Uplink-Leistungsniveaus, wenn das geschätzte Interferenzniveau einen bestimmten Grenzwert erreicht.

11. Zweites Funknetzsubsystem (15) nach Anspruch 10,
wobei das Gateway (17) der kleinen Zelle auch zur Übertragung von Funkverbindungs-Setupinformationen einschließlich Informationen zu Parametern der physikalischen Schicht and das Funknetzsubsystem (1) der Makrozelle über die Setupparameter-Austauschschnittsttelle ausgestaltet ist, wenn ein Benutzergerät (23), das mit einem von dem mindestens einen Router (19) der Basisstation der kleinen Zelle verbunden ist, der durch den Gateway (17) der kleinen Zelle gesteuert wird, sich innerhalb von dem Abdeckungsbereich einer benachbarten Makrozelle befindet.

12. Zweites Funknetzubsystem (1) nach Anspruch 11,
wobei die Setupparameter-Austauschschnittstelle (7) eine Iur-Schnittstelle ist und wobei die Funkverbindungs-Setupinformationen Funkverbindungs-"RL"-(Radio Link)-Setupinformationen eines Radio Network Subsystem Application Part "RNSAP" entsprechen.

13. Heterogenes Mobilfunkkommunikationsnetz, das Folgendes aufweist:
- ein erstes Funknetzsubsystem (1) mit mindestens einer Makrozelle, die einen ersten Abdeckungsbereich vorsieht,
- eine zweites Funknetzsubsystem (15), das einem Funknetzsubsystem einer kleinen Zelle mit mindestens einer kleinen Zelle unabhängig vom ersten Funknetzsubsystem entspricht und das einen zweiten Abdeckungsbereich bietet, der den ersten Abdeckungsbereich zumindest teilweise überlappt,
wobei das erte Funknetzsubsystem (1) eine Funknetzsteuereinheit (3) und Verbindungseinrichtungen aufweist, die zum Errichten einer Kommunikationsschnittstelle zwischen der Funknetzsteuereinheit und der mindestens einen Makrobasisstation (5), die die mindestens eine Makrozelle betriebt, and der einen Seite und einem Kernnetz (11) auf der anderen Seite ausgelegt sind,
- wobei das zweite Funknetzsubsystem (15) ein Gateway (17) der kleinen Zelle und Verbindungseinrichtungen zum Errichten einer Kommunikationsschnittstelle zwischen dem Gateway (17) der kleinen Zelle und mindestens einem Router (19) der Basisstation der kleinen Zelle, die die kleine Zelle betreibt, an der einen Seite und einem Kernnetz (11) an der anderen Seite aufweist,
wobei das Funknetzsubsystem (1, 15) Einrichtung aufweist, die ausgestaltet sind zum:
- Errichten einer Setupparameter-Austauschschnittstelle (7) zwischen der Funknetzsteuereinheit (3) des ersten Funknetzsubsystems (1) und dem Gateway (17) der kleinen Zelle des zweiten Funknetzsubsystems (15),
- Empfangen über das Gateway (17) der kleinen Zeile von Funkverbindungs-Setupinformationen, einschließlich Informationen zu Parametern der physikalischen Schicht über die errichtete Schnittstelle (7), wenn ein Non-serving Benutzergerät (23) des mindestens einen Routers (19) der Basisstation der kleinen Zelle, das mit der mindestens einen Makrobasisstation (5) verbunden ist, sich innerhalb von dem Abdeckungsbereich der mindestens einen kleinen Zelle befindet und eine Funkverbindung zu dem mindestens eine Router (19) der Basisstation der kleinen Zelle errichtet, oder Empfangn von der Funknetzsteuereunheit (3) von Funkverbindungs-Setupinformationen, einschließlich Informationen zu Parametern der physikalischen Schicht über die errichtete Schnittstelle (7), wenn ein Non-serving Benutzergerät (23) der mindestens einen Makrobassistation (5), das mit dem mindestens einen Router (19) der Basisstation der kleinen Zelle verbunden ist, sich innerhalb von dem Abdeckungsbereich der mindestens einen Makrozelle befindet und eine Funkbverbindung zu der mindestens einen Makrobasisstation (5) errichtet,
**dadurch gekennzeichnet,**
**dass** das Funknetzubsystem außerdem Einrichtungen aufweist, die ausgestaltet sind zum:
- Empfangen über den mindestens einen Router (19) der Station der kleinen Zelle von kodierten E-DCH-Steuerkanalinformationen von einem Non-serving Benutzergerät (23) von dem mindestens einen Router (19) der Basisstation der kleinen Zelle oder Empfangen durch die mindestens eine Makrobasisstation (5) von kodierten E-DCH-Steuerkanalinformationen von einem Non-serving Benutzergerät (23) von der mindestens einen Makrobasisstation (5),
- Dekodieren durch den mindestens eine Router (19) der Basisstation der kleinen Zelle oder durch die mindestens eine Makrobasisstation (5) der empfangen kodierten E-DCH-Steuerkanalinformationen, basierend auf ausgetauschten Funkverbindungs-Setupinformationen,
- Schätzen des Uplink-Interferenzniveaus durch den mindestens einen Router (19) der Basisstation der kleinen Zelle oder durch die mindestens eine Makrobasisstation (5), das von einem Non-serving Benutzergerät (23) von dem mindestens eine Router (19) der Basisstation der kleinen Zelle oder von der mindestens einen Makrobasisstation (5) erzeugt worden ist, die sich im überlappenden Teil des Abdeckungsbereichs des ersten Funknetzsubsystems (1) und des zweiten Funknetzsubsystems (15) befinden, basierend auf den dekodierten E-DCH-Steuerkanalinformationen,
- Errichten durch den mindestens einen Router (19) der Basisstation der kleinen Zelle oder durch die mindestens eine Makrobasisstation (5) einer Downlink-Verbindung mit einem Non-serving E-DCH-Benutzergerät (23) von dem mindestens einen Router (19) der Basisstation der kleinen Zelle oder von der mindestens einen Makrobasisstation (5), basierend auf empfangenen Funkverbindungs-Setupinformationen, und Senden einer Anforderung zur Verringerung seines Uplink-Leitungsniveaus von dem mindestens eine Router (19) der Basisstation der kleinen Zelle oder von dem mindestens eine Makrobasisstation (5) über die errichtete Downlink-Verbindung zu diesem Benutzergerät (23), wenn das von dem Benutzergerät erzeugte geschätzte Uplink-Interferenzniveau einen bestimmten Grenzwert erreicht.

## Revendications

1. Procédé de réduction d'interférences de liaison montante produites par des équipements utilisateurs (23) qui ne sont pas en service par le biais d'un canal dédié augmenté (E-DCH) dans un réseau de communication cellulaire sans fil hétérogène comprenant un premier et un deuxième sous-système (1, 15) de réseau radio qui sont indépendants l'un de l'autre et qui présente des zones de couverture qui se chevauchent au moins partiellement, selon lequel :
le premier sous-système de réseau radio comprend un contrôleur (3) de réseau radio établissant une interface de communication avec au moins une macro-station de base (5) faisant fonctionner au moins une macro-cellule d'une part, et un coeur de réseau (11) d'autre part ;
le deuxième sous-système de réseau radio comprend une passerelle (17) à petites cellules établissant une interface de communication avec au moins un routeur (19) de station de base à petites cellules faisant fonctionner au moins une petite cellule d'une part et un coeur de réseau (11) d'autre part ;
le procédé comprenant les étapes suivantes :
l'établissement d'une interface d'échange (7) de paramètres de configuration entre le contrôleur (3) de réseau radio du premier sous-système (1) de réseau radio et la passerelle (17) du deuxième (15) sous-système de réseau radio ;
lorsqu'un équipement utilisateur lié au premier sous-système de réseau radio (1, 15) se situe dans la zone de couverture du deuxième sous-système de réseau radio (1, 15) et établit une liaison radio avec le deuxième sous-système de réseau radio, la transmission, via l'interface établie (7), d'informations de configuration de liaison radio comportant des informations de configuration de couche physique en provenance du premier sous-système de réseau radio au deuxième sous-système de réseau radio ;
le procédé étant **caractérisé en ce qu'**il comprend également les étapes suivantes :
la réception, par le deuxième sous-système de réseau radio (1, 15) d'informations de canal de contrôle E-DCH codées pour liaison montante, envoyées depuis de l'équipement utilisateur ;
la configuration du deuxième sous-système de réseau radio (1, 15) basée sur les informations de configuration de liaison radio transmises afin de décoder les informations de canal de contrôle E-DCH reçues ;
l'estimation du niveau d'interférence de liaison montante produite par l'équipement utilisateur (23) dans le deuxième sous-système de réseau radio, basée sur les informations de canal de contrôle E-DCH décodées ;
en cas d'atteinte d'un seuil prédéterminé du niveau estimé d'interférence de liaison montante dans le deuxième sous-système de réseau radio, l'établissement de connexion descendante entre le deuxième sous-système de réseau radio et l'équipement utilisateur basé sur les informations de configuration de liaison radio transmises, et l'envoi via la connexion descendante établie d'une requête en réduction du niveau de puissance de liaison montante dudit équipement utilisateur.

2. Procédé selon la revendication 1, selon lequel le premier sous-système de réseau radio (1) fournit une couverture macrocellulaire et comprend au moins une macro-station de base (5) et un contrôleur de réseau radio (3), et selon lequel le deuxième sous-système de réseau radio (15) fournit une couverture à petites cellules et comprend au moins un routeur (19) de station de base à petite cellules et une passerelle à petite cellules.

3. Procédé selon l'une quelconque des revendications précédentes, selon lequel le réseau de communication cellulaire sans fil se base sur le protocole d'accès multiple à large bande par répartition en code (WCDMA).

4. Procédé selon la revendication 3, selon lequel l'interface établie entre le premier (1, 15) et le deuxième sous-système de réseau radio est une interface Iur (7) établie entre la passerelle à petite cellules (17) et le contrôleur de réseau radio (3) du sous-système de réseau radio (1) fournissant une couverture macrocellulaire.

5. Procédé selon la revendication 3 ou la revendication 4, selon lequel les informations de configuration de liaison radio transmises via l'interface établie (7) correspondent aux informations de configuration de liaison radio (RL) à partie applicative de sous-système de réseau radio (RNSAP).

6. Procédé selon quelconque des revendications précédentes, selon lequel le seuil prédéterminé correspond à un niveau seuil d'interférence prédéterminé.

7. Procédé selon quelconque des revendications précédentes, selon lequel la requête en réduction du niveau de puissance de liaison montante correspond à une autorisation relative de réduction du niveau de puissance de liaison montante.

8. Sous-système premier (1) de réseau radio présentant au moins une macrocellule comprenant :
un contrôleur de réseau radio (3) ;
des moyens de connexion adaptés à l'établissement d'une interface de communication entre le contrôleur de réseau radio et au moins une macro-station de base (5) d'une part, et d'un coeur de réseau (11) d'autre part ;
**caractérisé en ce que** les moyens de connexion sont également adaptés à l'établissement d'une interface d'échange d'informations de configuration (7) entre le contrôleur de réseau radio (3) et une passerelle à petite cellules (17) d'un second sous-système de réseau qui fonctionne de manière indépendante du premier sous-système de réseau radio, et qui correspond à un sous-système de réseau radio à petites cellules (15) d'une petite cellule voisine, le contrôleur de réseau radio (3) étant configuré pour transmettre des informations de configuration de liaison comportant des informations de configuration de couche physique à la passerelle à petites cellules (17) du sous-système de réseau radio à petites cellules (15) via l'interface d'échange d'informations de configuration (7) lorsqu'un équipement utilisateur (23) connecté à une des au moins une macro-stations de base (5) se situe dans la zone de couverture de la petite cellule voisine, selon lequel le contrôleur de réseau radio (3) est également configuré pour recevoir des informations de configuration de liaison comportant des informations de configuration de couche physique en provenance de la passerelle à petites cellules (17) du sous-système de réseau radio à petites cellules (15) via l'interface d'échange d'informations de configuration (7) lorsqu'un équipement utilisateur (23) connecté à une petite cellule voisine du sous-système de réseau radio à petites cellules (15) se situe dans la zone de couverture de la au moins un macro-station de base (5) et selon lequel le sous-système de réseau radio (1) comprend également :
des moyens de réception destinés à recevoir des informations de canal de contrôle E-DCH codées transmises sur la couche physique de la liaison montante par un équipement utilisateur (23) connecté à la petite cellule voisine ;
des moyens de traitement adaptés à :
décoder les informations de canal de contrôle E-DCH reçues basées sur les informations de configuration de liaison radio reçues ;
estimer le niveau d'interférence produit par ledit équipement utilisateur (23) dans une macrocellule opérée par ladite au moins une macro-station de base (5) contrôlée par le contrôleur de réseau radio (3) sur la base des informations de canal de contrôle E-DCH décodées ;
établir une connexion descendante entre l'équipement utilisateur (23) et la au moins une macro-station de base (5) sur la base des informations de configuration de liaison radio reçues et envoyer une requête via la connexion descendante établie audit équipement utilisateur (23) de réduction de son niveau de puissance de liaison montante si le niveau d'interférence estimé atteint un seuil prédéterminé.

9. Sous-système premier (1) de réseau radio selon la revendication 8, selon lequel l'interface d'échange d'informations de configuration (7) est une interface Iur et selon lequel les informations de configuration de liaison radio correspondent aux informations de configuration de liaison radio (RL) à partie applicative de sous-système de réseau radio (RNSAP).

10. Sous-système second (15) de réseau radio correspondant à un sous-système de réseau radio à petites cellules (15) présentant au moins une petite cellule comprenant :
une passerelle à petites cellules (17) ;
des moyens de connexion destinés à établir une interface de communication entre la passerelle à petites cellules et au moins un routeur de station de base à petites cellules (19) d'une part, et d'un coeur de réseau d'autre part ;
**caractérisé en ce que** les moyens de connexion sont également adaptés à l'établissement d'une interface d'échange d'informations de configuration (7) entre la passerelle à petites cellules (17) et un contrôleur de réseau radio (3) d'une macrocellule voisine d'un premier sous-système de réseau radio fonctionnant de manière indépendante du sous-système de réseau radio à petites cellules, ladite passerelle à petites cellules (17) étant configurée pour recevoir des informations de configuration de liaison radio comportant des informations de configuration de couche physique en provenance du contrôleur de réseau radio (3) du premier sous-système de réseau radio via l'interface d'échange d'informations de configuration (7) lorsqu'un équipement utilisateur (23) connecté à la macrocellule voisine du premier sous-système de réseau radio se situe dans la zone de couverture dudit au moins un routeur de station de base à petites cellules (19) du sous-système de réseau radio à petites cellules, et établit une liaison radio avec ledit au moins un routeur de station de base à petites cellules (19) ; et
selon lequel le sous-système de réseau radio à petites cellules (15) comprend également :
des moyens de réception destinés à recevoir des informations de canal de contrôle E-DCH codées transmises sur la couche physique de la liaison montante par un équipement utilisateur (23) connecté à la macrocellule voisine ;
des moyens de traitement adaptés à :
décoder les informations de canal de contrôle E-DCH reçues basées sur les informations de configuration de liaison radio reçues ;
estimer le niveau d'interférence produit par ledit équipement utilisateur (23) dans une petite cellule opérée par ledit au moins un routeur de station de base (19) contrôlé par la passerelle à petites cellules (17) sur la base des informations de canal de contrôle E-DCH décodées ;
établir une connexion descendante entre l'équipement utilisateur (23) et la au moins un routeur de station de base (19) sur la base des informations de configuration de liaison radio reçues et envoyer une requête via la connexion descendante établie audit équipement utilisateur (23) de réduction de son niveau de puissance de liaison montante si le niveau d'interférence estimé atteint un seuil prédéterminé.

11. Sous-système second (1) de réseau radio selon la revendication 10, selon lequel la passerelle à petites cellules (17) est également configurée pour transmettre des informations de configuration de liaison radio comportant des informations de configuration de couche physique au sous-système de réseau radio macrocellulaire (1) via l'interface d'échange d'informations de configuration lorsqu'un équipement utilisateur (23) connecté à au moins un dudit au moins un routeur de station de base à petites cellules (19) contrôlé par la passerelle à petites cellules (17) se situe dans la zone de couverture d'une macrocellule voisine.

12. Sous-système second (1) de réseau radio selon la revendication 11, selon lequel l'interface d'échange d'informations de configuration (7) est une interface Iur et selon lequel les informations de configuration de liaison radio correspondent aux informations de configuration de liaison radio (RL) à partie applicative de sous-système de réseau radio (RNSAP).

13. Réseau cellulaire sans fil hétérogène comprenant :
un premier sous-système de réseau radio (1) présentant au moins une macrocellule fournissant une première zone de couverture ;
un second sous-système de réseau radio (15) correspondant à un sous-système de réseau radio à petites cellules présentant au moins une petite cellule indépendante du premier sous-système de réseau radio et fournissant une zone de couverture se chevauchant au moins partiellement avec la première zone de couverture ;
selon lequel le premier sous-système de réseau radio (1) comprend un contrôleur de réseau radio (3) et des moyens de connexion adaptés à établir une interface de communication entre le contrôleur de réseau radio et au moins une macro-station de base (5) faisant fonctionner la au moins une macrocellule d'une part, et un coeur de réseau (11) d'autre part ;
selon lequel le second sous-système de réseau radio (15) comprend une passerelle à petites cellules (17) et des moyens de connexion destinés à établir une interface de communication entre la passerelle à petites cellules (17) et au moins un routeur de station de base à petites cellules (19) faisant fonctionner la au moins une petite cellule, d'une part, et un coeur de réseau, d'autre part ;
selon lequel les sous-systèmes de réseau radio (1, 15) comprennent des moyens configurés pour :
établir une interface d'échange d'informations de configuration (7) entre le contrôleur de réseau radio (3) du premier sous-système de réseau radio (1) et la passerelle à petites cellules (17) du second sous-système de réseau radio (15) ;
recevoir, via la liaison radio de la passerelle à petites cellules des informations de configuration de liaison radio comportant des informations de configuration de couche physique via l'interface établie (7) lorsqu'un équipement utilisateur (23) qui n'est pas en service du au moins un routeur de station de base à petites cellules (19) connecté à la au moins une macro-station de base (5) se situe dans la zone de couverture de la au moins une petite cellule et établit une liaison avec ladite au moins un routeur de station de base à petites cellules (19), ou recevant via le contrôleur de réseau radio (3) des informations de configuration de liaison radio comportant des informations de configuration de couche physique via l'interface établie (7) lorsqu'un équipement utilisateur (23) de la au moins une macro-station de base (5) connecté au au moins un routeur de station de base à petites cellules (19) se situe dans la zone de couverture de la au moins une macrocellule et établir une liaison radio avec la au moins une macro-station de base (5) ;
**caractérisé en ce que** les sous-systèmes de réseau radio comprennent également des moyens configurés pour :
recevoir, via le au moins un routeur de station de base à petites cellules (19) des informations de canal de contrôle E-DCH codées en provenance d'un équipement utilisateur (23) qui n'est pas en service du au moins un routeur de station de base à petites cellules (19), ou recevoir, via ladite au moins une macro-station de base (5) des informations de canal de contrôle E-DCH codées en provenance d'un équipement utilisateur (23) qui n'est pas en service de la au moins une macro-station de base (5) ;
décoder via le au moins un routeur de station de base à petites cellules (19) ou via ladite au moins une macro-station de base (5), les informations de canal de contrôle E-DCH codées reçues sur la base des informations de configuration de liaison radio échangées ;
estimer, via le au moins un routeur de station de base à petites cellules (19) ou via ladite au moins une macro-station de base (5), le niveau d'interférence de liaison montante produite par un équipement utilisateur (23) qui n'est pas en service du au moins un routeur de station de base à petites cellules (19) ou de la au moins une macro-station de base (5) situé(e) dans la partie chevauchante du premier (1) et du second (15) sous-système de réseau radio sur la base des informations de canal de contrôle E-DCH décodées ;
établir, via le au moins un routeur de station de base à petites cellules (19) ou via ladite au moins une macro-station de base (5), une connexion descendante avec un équipement utilisateur E-DCH qui n'est pas en service du au moins un routeur de station de base à petites cellules (19) ou de la au moins une macro-station de base (5), sur la base des informations de configuration de liaison radio reçues et envoyer, via le au moins un routeur de station de base à petites cellules (19) ou via ladite au moins une macro-station de base (5), via l'interface de connexion descendante établie audit équipement utilisateur (23) une requête en réduction du niveau de puissance de liaison montante si le niveau d'interférence estimé de liaison montante produite par ledit équipement utilisateur atteint un seuil prédéterminé.
